# EUROPEAN PATENT SPECIFICATION

(11) **EP 3 805 637 B1**
(45) Date of publication and mention of the grant of the patent: **15.01.2025**
(21) Application number: 19201725.9
(22) Date of filing: 07.10.2019
(51) Int. Cl.: F21V 19/00, F21S 41/19, F21V 29/70, F21S 41/141, F16B 5/04, B21D 22/20, F21Y 115/10

(54) **ELECTRONIC DEVICE AND METHOD FOR MANUFACTURING AN ELECTRONIC DEVICE**
ELEKTRONISCHE VORRICHTUNG UND VERFAHREN ZUR HERSTELLUNG EINER ELEKTRONISCHEN VORRICHTUNG
DISPOSITIF ÉLECTRONIQUE ET PROCÉDÉ DE FABRICATION D'UN DISPOSITIF ÉLECTRONIQUE

(43) Date of publication of application: 14.04.2021
(73) Proprietor: Lumileds Holding B.V., 1118 CL Schiphol (NL)
(72) Inventor: HEFFELS, Wilbert, 52068 Aachen (DE); VERBURG, Piet, 52068 Aachen (DE); HOLTRUP, Matthias, 52068 Aachen (DE)
(74) Representative: Cohausz & Florack

(56) References cited:
- EP-A1- 0 291 400
- EP-A1- 3 246 623
- JP-A- 2012 218 275
- JP-A- H09 267 140
- US-A1- 2012 127 743
- US-A1- 2016 234 958
- US-B2- 9 394 933

## Description

### FIELD OF THE INVENTION

The present disclosure relates to an electronic device, in particular to an LED based lighting device for example for vehicular applications, and to a method of manufacturing the electronic device.

### BACKGROUND OF THE INVENTION

Electronic components such as light emitting diodes (LEDs), printed circuit boards (PCBs), processors, memory chips, or transistors are usually mounted in thermal connection with heat dissipation structures such as heat sinks and/or heat spreaders to dissipate heat generated upon operation. Thereby, a reliable heat transport and a secure stable thermal connection between the electronic component and a corresponding heat dissipation structure depend on a reliable mechanical connection (direct or indirect) between the electronic component and the corresponding heat dissipation structure. Such mechanical connection can for example be achieved using fastening members such as screws or rivets or by gluing.

Usually, apart from reliability of the mechanical connection, electronical components need to be positioned with high precision with respect to the heat dissipation structure, whereby the precise positioning should be guaranteed during the entire lifetime of the electronic device. While for mechanical fastening, riveting offers advantages in terms of fabrication speed, reduced fabrication complexity and costs, deformation of rivets for fastening the electronic component to the heat dissipation structure often leads to overstressing of the electronic component (for example the PCB), which in turn often leads to loose, inaccurate and non-reliable mechanical connections.

US 2016/0234958 A1 discloses a fastening element for fastening a first component at a second component, the fastening element including a shaft which includes at least one spring elastic support element which anchors the fastening element at the second component; a shaft head which has a larger diameter than the shaft and which is arranged at a first end of the shaft; and a clamping element which clamps the first component against the second component with a defined contact pressure, wherein the first component is a circuit board which is fitted with LEDs and includes a first pass through opening and the second component is a lamp element which includes a recess which is configured as a dead hole or a second pass through opening.

US 2012/0127743 A1 shows a lighting device, comprising: a body, having an outer contact surface; and a light source carrier, pressed onto the contact surface by at least one pressing element, wherein the pressing element is latched on the lighting device.

EP 0 291 400 A1 discloses a power module, comprising a printed circuit rigidly attached onto a heat sink on which are deposited one or more power silicon chips by directly soldering or bonding so as to enable heat to be removed and distributed between the various chips, the electrical linkage between the various output ranges of the silicon chips and the connections being carried out by ultrasonic soldering of an aluminum wire between the output ranges of the silicon chips themselves and the printed circuit which thus enables the current to pass to a connector connected directly to the latter.

### SUMMARY OF THE INVENTION

It is an object of the present invention to provide an electronic device with a reliable and accurate mechanical connection between one or more electronic components and at least one corresponding heat sink. It is a further object of the present invention to provide a method which allows to reliably and accurately mechanically fasten an electronic component to a corresponding heat sink.

According to a first aspect of the present invention, an electronic device is provided, which comprises: an electronic component; at least one heat dissipation structure; at least one fastening member configured to mechanically fasten the electronic component to the at least one heat dissipation structure; wherein the at least one fastening member is configured to extend through a corresponding opening formed in the electronic component; wherein the at least one fastening member comprises a deformed head portion comprising at least two wing portions respectively configured to be pressed against a surface of the electronic component surrounding the opening formed in the electronic component.

According to a second aspect of the present invention, a method of manufacturing the electronic device according to the first aspect is provided, the method comprising: providing the electronic component; providing the at least one heat dissipation structure; providing the at least one fastening member configured to mechanically fasten the electronic component to the at least one heat dissipation structure and configured to extend through the corresponding opening formed in the electronic component; deforming an end portion of the fastening member into the deformed head portion comprising the at least two wing portions to be pressed against the surface of the electronic component surrounding the opening formed in the electronic component.

Exemplary embodiments of the first and second aspect of the invention may have one or more of the properties described below.

In an exemplary embodiment, the heat dissipation structure comprises a heat sink and/or a heat spreader. A heat sink corresponds to a passive heat exchanger that transfers heat generated upon operation of electronic components such as printed circuit boards (PCBs), light emitting diodes (LEDs), processors, memory chips, transistors, etc., to a gaseous or fluid medium, preferably air or a liquid coolant, to thereby dissipate heat away from the electronic component. In an exemplary embodiment, the heat sink is made from a thermally conductive material such as a metallic material, e.g. from sheet metal. In an exemplary embodiment, the heat sink comprises or consists of coated or anodized metallic materials. In an exemplary embodiment, the heat sink comprises or consists of (in particular coated or anodized) aluminum, copper, and/or (in particular coated or anodized) aluminum and/or copper based alloys.

The heat spreader is a component configured to transfer heat energy from the electronic component to a heat sink and may in an exemplary embodiment be realized as a plate or block of material having a high thermal conductivity. In an exemplary embodiment, the heat spreader comprises or consists of coated or anodized metallic materials. In an exemplary embodiment, the heat spreader comprises or consists of (in particular coated or anodized) aluminum, copper, and/or (in particular coated or anodized) aluminum and/or copper based alloys.

In an exemplary embodiment, the electronic component comprises or corresponds to a sensitive electronic component such as a printed circuit board (PCB), one or more processors, one or more memory chips, or one or more transistors. In a particular exemplary embodiment, the electronic component comprises one or more PCBs and/or one or more LEDs, in particular one or more PCBs electrically connected to the one or more LEDs for controlling the one or more LEDs.

According to the first aspect, the at least one fastening member is configured to mechanically fasten the electronic component to the heat dissipation structure. In an exemplary embodiment, the at least one fastening member is a rivet, i.e. a permanent mechanical fastener comprising an essentially cylindrical shaft. The fastening member (e.g. a portion of the essentially cylindrical shaft thereof) is configured to extend through an opening formed in the electronic component, e.g. a through hole formed in the electronic component, e.g. of a PCB. For fastening the electronic component to the heat dissipation structure, an end portion of the fastening member (e.g. of the essentially cylindrical shaft) is deformed e.g. using a stamping or punching tool to form the deformed head portion. As opposed to a conventional fastening member such as a conventional rivet with an end portion that transforms into a rather undefined mushroom-shape, an end portion of the fastening member according to the first aspect transforms into a deformed head portion comprising at least two wing portions. In other words, the deformed head portion comprises at least two members (wing portions) that extend essentially horizontally in relation to a main axis of the fastening member (an axis that extends through the opening formed in the electronic device) and that are configured to be pressed against a surface surrounding the opening. A wing portion is thus in an exemplary embodiment to be understood as a rigid horizontal member that essentially horizontally projects from the deformed head portion of the fastening member.

With the at least two wing portions of the deformed head portion then being pressed against a corresponding surface of the electronic component, the electronic component is pressed in a direction towards the heat dissipation structure. At its end opposing the deformed head portion, the fastening member is mechanically connected to the heat dissipation structure such that by deforming the end portion of the fastening member, the electronic component is fastened to the heat dissipation structure. For example, the fastening member may further extend through an opening (e.g. a through hole) of the heat dissipation structure and may comprise a further head portion in engagement with a surface of the heat dissipation structure at a side of the heat dissipation structure facing away from the electronic component. According to the invention, the fastening member is integrally formed with the heat dissipation structure.

By deforming the end portion of the fastening member into a deformed head portion comprising the at least two wing portions, a controlled predefined retention force is provided advantageously securing the electronic component to the heat dissipation structure. At the same time, overstressing of the connection between the fastening member and the PCB is prevented. As opposed to end portions of conventional fastening members such as conventional rivets that are deformed into undefined mushroom heads, a deformation into defined wings allows to control a distribution of pressing forces acting on a surface of the electronic component surrounding the opening (e.g. the through hole) onto which the wing portions are pressed. Thus controlling a distribution of the pressing forces, overstressing of the connection and a subsequent loosening of the connection can thus be prevented. As a result, a reliable positioning of an electronic component such as a PCB on a heat dissipation structure such as a heatsink or heat spreader can be achieved and maintained during the lifetime of the electronic device.

According to an exemplary embodiment of the invention, the at least two wing portions extend in respective directions away from a center of the deformed head portion and are mutually separated by a corresponding indentation oriented towards the center of the deformed head portion. For example, in an exemplary embodiment, the deformed head portion comprises at least four wing portions, wherein pairs of wing portions are separated by a corresponding indentation. A particular advantage achieved by a deformed head according to any of these two embodiments is that, as e.g. opposed to a conventional mushroom head, the interplay between wing portions and indentations allows to advantageously distribute a pressing force exerted onto a corresponding surface of the electronic component in a controlled and predetermined manner and thus to prevent overstressing of the connection.

According to an exemplary embodiment of the invention, at least a portion of the fastening member extending within the opening formed in the electronic component (e.g. the through hole) comprises an inner surface with at least one recess extending essentially along a longitudinal axis of the fastening member. To this end, according to an exemplary embodiment of the present invention, the fastening member comprises a hollow shaft portion (a hollow, essentially cylindrical portion) with an inner surface comprising one or more recesses formed along a longitudinal axis of the fastening member. The deformed head portion of the fastening member is formed by deforming an end portion of the fastening member comprising an inner surface with at least one recess formed essentially along a longitudinal axis of the fastening member.

The one or more recesses provided at said inner surface facilitate the deformation of the end portion of the fastening member into the advantageously deformed head portion and facilitate predefining the wing portions. When deforming the end portion of the fastening member into the head portion comprising the at least two wing portions, sections of the one or more recesses formed in the inner surface of the end portion are (at least partially) transformed into the indentations separating respective pairs of the at least two wing portions. In other words, in an exemplary embodiment, the indentation separating the at least two wing portions corresponds at least to a section of the at least one recess before deforming the end portion of the fastening member.

By providing said recesses in the inner surface of the fastening member, e.g. by adjusting a number of recesses, by adjusting a depth of the recesses, by providing further geometrical aspects of the recesses such as angle, change of depth of an individual recess along the longitudinal direction, etc., the deformation behavior of the end portion of the fastening member can be adjusted and geometrical properties (length, width, area, shape, etc.) of wing portions and indentations can be predefined. In turn, it thus becomes possible to predetermine a suitable distribution and magnitude of a pressing force exerted by the resulting wing portions onto a surface of the electronic component in a particular advantageous manner.

The at least one fastening member is formed integrally with the at least one heat dissipation structure. In a particular exemplary embodiment, the heat dissipation structure and the at least one fastening member are formed from a common piece of sheet metal in a same deep drawing process. On the one hand, these embodiments offer a highly accurate positioning of the at least one fastening member in relation to the heat dissipation structure, which in turn allows for a highly precise positioning of the electronic component (e.g. the PCB) in relation to the heat dissipation structure. On the other hand, these embodiments offer a highly reliable connection between the heat dissipation structure and the at least one fastening member which eliminates a source of connection failure that may be present in case of separate fastening members. At the same time, these embodiments allow for a simplified production process of heat dissipation structure and the at least one fastening member, as these components can be manufactured using a single piece of sheet metal and a same punching or stamping tool for deforming the sheet metal. While the fastening member and/or the heat dissipation structure may be manufactured using a suitable technology such as die casting, as opposed e.g. to such die casting process, forming the heat dissipation structure and the at least one fastening member in a deep drawing process from a same piece of sheet metal is in particular advantageous as it allows for a greatly simplified production e.g. avoiding a need of molding dies.

According to an exemplary embodiment of the invention, at least two fastening members are formed integrally with the at least one heat dissipation structure. Using two or more fastening members for fastening the electronic component on the heat dissipation structure allows positioning of the electronic component with high precision as each of the at least two fastening members may act as alignment member when placing the electronic component on the heat dissipation structure. At the same time, reliability of the mechanical connection can be increased while pressing forces can be distributed even more evenly which facilitates heat transport from the electronic component to the heat dissipation structure.

In an exemplary embodiment, the electronic component is a printed circuit board and is electrically connected to at least one light emitting element thermally connected with the heat dissipation structure. The at least one fastening member provided in accordance with the first aspect of the invention and in accordance with the preceding embodiments is of particular advantage for applications involving light emitting elements, which in typical applications (e.g. in vehicular exterior lighting applications, such as headlight or taillight applications) produce large amounts of heat upon operation. According to an exemplary embodiment of the invention, the at least one light emitting element is an LED, in particular wherein the electronic device is an LED based lighting device, in particular an LED bulb. Such LED bulb may for example be used in a headlight or taillight of a car or motorcycle. In particular for high-intensity LED bulbs for vehicular applications, the at least one fastening member allows for a particular advantageous connection of the LED and/or the PCB to the heat distribution structure which thus enables an enhanced and reliable heat transfer that can be maintained throughout the entire lifetime of the electronic device.

In an exemplary embodiment, the at least one fastening member is a rivet. In other words, the at least one fastening member is a permanent mechanical fastener including a cylindrical shaft either with a head on one end (referred to as factory head) in a non-claimed embodiment, or fixedly connected to the heat dissipation structure at this end (e.g. by being integrally formed therewith). For fastening the electronic component to the heat dissipation structure, the rivet is placed in an opening (e.g. a through hole) formed in the electronic component e.g. by punching or drilling. An end portion of the rivet extending out of the opening is deformed e.g. by punching. The deformed end portion is thus formed into the above described deformed head portion with the at least two wing portions to hold the electronic component in place. As opposed to different fastening members such as screws, use of a rivet is advantageous in that it allows for a fast and non-complex connection process, while the provision of the above described head portion with the at least two wings allows for a particularly accurate and reliable connection.

The second aspect of the present invention provides a particularly advantageous method for manufacturing the electronic device according to the first aspect. In an exemplary embodiment of the second aspect, the method comprises mechanically fastening the electronic component to the at least one heat dissipation structure by deforming the end portion of the fastening member into the deformed head portion. In order to advantageously enable deforming the end portion into the deformed head portion comprising the at least two wing portions, in an exemplary embodiment, the end portion of the fastening member comprises an inner surface with at least one recess formed essentially along a longitudinal axis of the fastening member.

In an exemplary embodiment of the second aspect of the present invention, the method further comprises mounting the at least one electronic component to the at least one heat dissipation structure, wherein the mounting comprises guiding the fastening member through the opening formed in the electronic component.

In an exemplary embodiment of the second aspect of the present invention, the method comprises forming the fastening member in a deep drawing process using a punch comprising an essentially cylindrical base portion and at least one fin extending on an outer surface of the base portion along a longitudinal axis of the punch. Such punch (punching or stamping tool) is of particular advantage in that it enables producing the above described at least one fastening member with one or more recesses at an inner surface in a relatively simple, reliable and effective manner by means of a deep drawing process. In an exemplary embodiment of the second aspect, the method further comprises carving the at least one recess at least into the inner surface of the end portion of the fastening member by means of the at least one fin. Thus, by defining a shape of the at least one fin, corresponding geometrical properties of the carved recess can be predefined with high accuracy and reliability.

Thus, in an exemplary embodiment, the method according to the second aspect makes use of a deep drawing tool (a punch) that comprises at least two fins that extend along side faces thereof and along a longitudinal direction thereof. When forming the fastening member, each of the at least two fins forms a corresponding recess in an inner surface of the fastening member. When upon fastening the electronic device to the heat dissipation structure an end portion of the fastening member having such recesses on its inner surface is deformed, the recesses cause a deformation of the end portion into wing portions, whereby indentations between pairs of wing portions are at positions of the original recesses. These wing portions project away from the deformed head portion essentially horizontally from a main axis of the fastening member and are pressed against a surface of the electronic device surrounding the opening through which a main portion of the fastening member extends, thereby mechanically fastening the electronic device to the heat dissipation structure. As opposed to a conventional deformed head e.g. of a conventional rivet (a deformed mushroom head), the recesses carved into the inner surface of the fastening member by means of the fins of the punch advantageously allow to predefine the manner in which the end portion of the fastening member deforms and thus allow to predefine a retention force to thereby prevent overstressing the connection between the fastening member and the electronic device.

In an exemplary embodiment of the second aspect, the method further comprises forming the at least one heat dissipation structure and the at least one fastening member in a same deep drawing process. For example, the punch (punching or stamping tool) may be part of a tool for forming the heat transfer structure. In this latter case, the heat transfer structure and the at least one fastening member can advantageously be formed in a single process step using a same tool and a same piece of sheet metal, whereby an advantageously simplified manufacturing process of reduced complexity is provided.

In an exemplary embodiment of the second aspect, the at least one electronic component is a printed circuit board, and the method further comprises providing at least one light emitting element (in an exemplary embodiment at least one LED) thermally connected with the heat dissipation structure; and electrically connecting the at least one light emitting element with the printed circuit board. As mentioned above, the above features of the first and the second aspect are of particular advantage for applications involving light emitting elements such as LEDs.

The features and example embodiments of the invention described above may equally pertain to the different aspects according to the present invention. In particular, with the disclosure of features relating to the lighting device according to the first aspect, also corresponding features relating to a method for producing a lighting device according to the second aspect are disclosed. It is to be understood that the presentation of embodiments of the invention in this section is merely exemplary and non-limiting.

Other features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and are merely intended to conceptually illustrate the structures and procedures described herein.

### BRIEF DESCRIPTION OF THE DRAWINGS

Examples of the invention will now be described in detail with reference to the accompanying drawing, in which:
- Fig. 1a: shows a schematic representation of a prior-art electronic device with fastening members extending through corresponding openings of a PCB;
- Fig. 1b: shows a schematic representation of the electronic device of Fig. 1a with fastening members with deformed head portions fastening a PCB;
- Fig. 2: shows a schematic representation of an electronic device with fastening members according to an exemplary embodiment; and
- Fig. 3: shows a punch for forming a fastening member according to an exemplary embodiment.

### DETAILED DESCRIPTION OF THE EMBODIMENTS

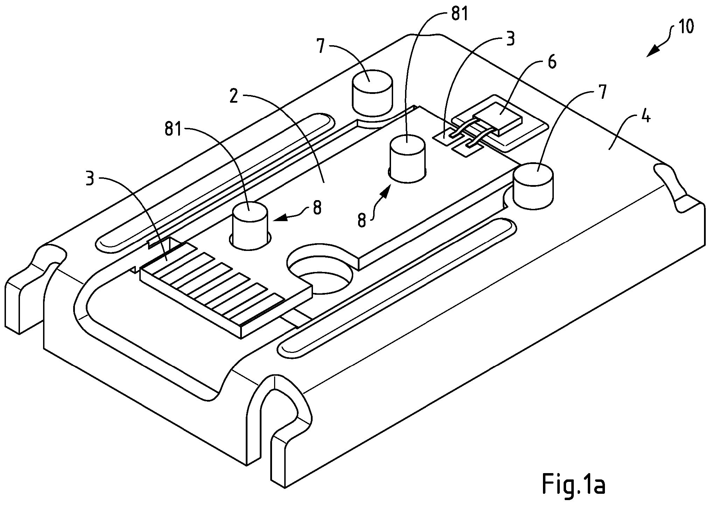

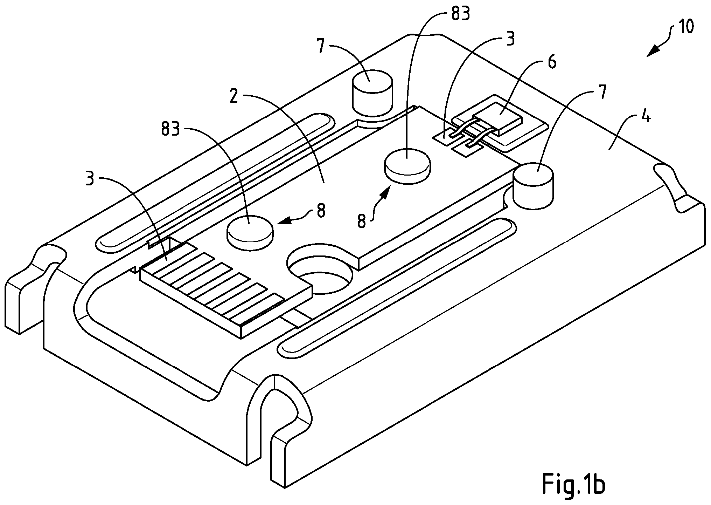

Fig. 1 shows a prior-art electronic device 10 with a heat dissipation structure in form of a heat sink 4 and with electronic components in form of a printed circuit board (PCB) 2 electrically connected to a light emitting diode (LED) 6. The electronic device 10 thus forms a lighting device suitable e.g. as light source for an automotive head or tail light. In use, a reflector (not visible) or different component of the head light or of an LED bulb is mounted to the electronic device 10 e.g. using pins 7. The PCB 2 is provided with a plurality of electrical contacts 3 for providing power to the LED 6 and for signal transmission back to a corresponding controller. PCB 2 and LED 6 are thermally connected with the heat sink 4 such that heat generated upon operation is efficiently dissipated away. To this end, heat sink 4 is made of a thermally conductive sheet metal. The heat sink 4 may for example be formed from coated or anodized metallic materials. For example, the heat sink 4 comprises or consists of (in particular coated or anodized) aluminum, copper, and/or (in particular coated or anodized) aluminum and/or copper based alloys. Two rivets 8 with respective end portions 81 extend through corresponding openings, in the shown case through holes, formed in PCB 2, these end portions 81 being in a state before deformation.

Fig. 1b shows the electronic device 10 of Fig. 1a, whereby the end portions 81 of Fig. 1a are deformed, e.g. by punching, into deformed head portions 83 of enlarged shape. As can be taken from the figure, the shown deformed head portions 83 are of conventional mushroom shape which does not allow for a controlled and predefined force distribution and which thus may lead to drawbacks described above.

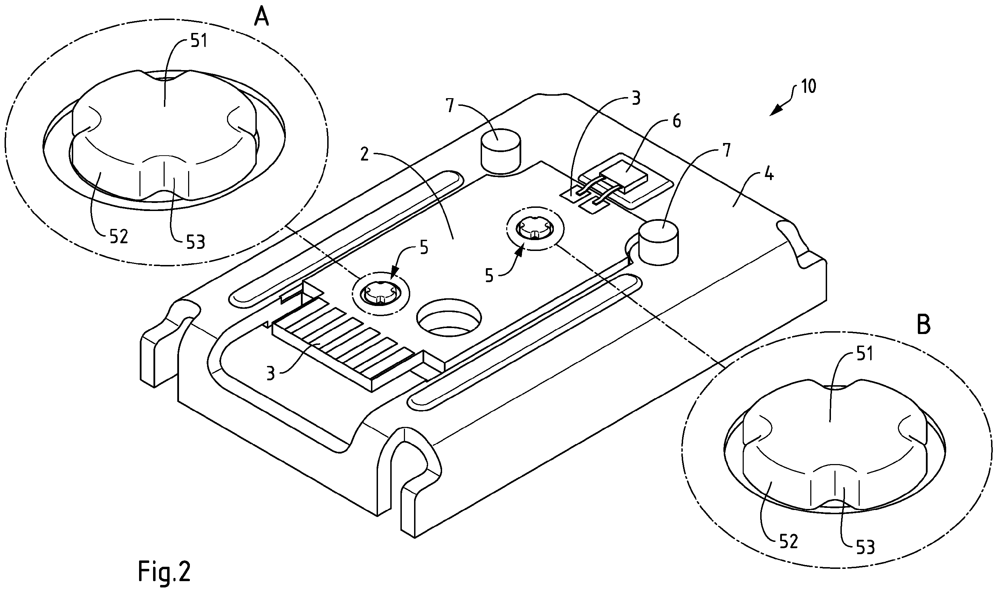

Fig. 2 shows an electronic device 10 using fastening members in form of rivets 5 according to an embodiment of the present invention. In other words, a portion of each of rivets 5 extending within a corresponding opening of PCB 2 is provided with recesses which before deformation also extended into an end portion of the corresponding rivet 5, the end portions in the shown state being deformed into deformed head portions 51. As can be taken from the enlarged views A and B in Fig. 2, each deformed head portion 51 respectively comprises four wing portions 52 pressed against a surface of the PCB 2 surrounding the corresponding openings through which rivets 5 extend. Thereby, pairs of respective wing portions 52 are separated by corresponding indentations 53 at positions of the recesses before deformation.

As explained, a particular advantage achieved by deformed head portions 51 is that the interplay between wing portions 52 and indentations 53 allows to advantageously distribute a pressing force exerted onto a corresponding surface of the electronic component in a controlled and predetermined manner and thus to prevent overstressing of the connection. This particularly advantageous deformation is achieved by recesses formed in inner surfaces of the respective rivets 5, whereby each recess is transformed into a corresponding indentation 53 upon deforming the respective rivet end portion into the deformed head portion 51.

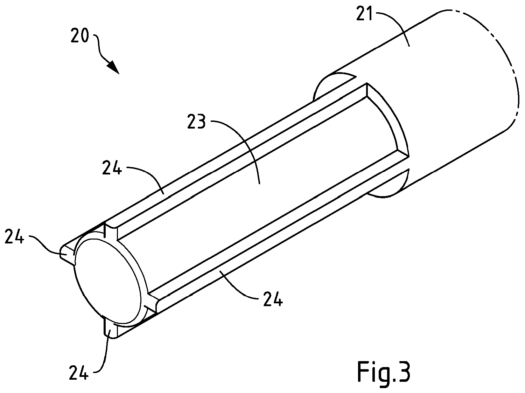

Fig. 3 shows a punch 20 for forming rivet 5 in a deep drawing process. As shown, punch 20 comprises a base 21 from which an essentially cylindrical base portion 23 extends. In the shown example, four fins 24 extend on an outer surface of the base portion along a longitudinal axis of the punch. When forming rivet 5, e.g. in a deep drawing process, using punch 20, fins 24 carve corresponding recesses into an inner surface of rivet 5. As explained in detail above, when upon fastening the electronic device to the heat dissipation structure an end portion of the fastening member having such recesses on its inner surface is deformed, the recesses cause indentations 53 at the resulting deformed head portion 51 of the fastening member which separate pairs of wing portions 52. These wing portions 52 project away from the deformed head 51 portion essentially horizontally from a main axis of the rivet 5 and are pressed against a surface of the PCB 2 surrounding the opening through which a main portion of the rivet 2 extends, thereby mechanically fastening the PCB 2 to the heat sink 4. The recesses carved into the inner surface of the rivet 5 by means of the fins 24 of the punch 20 advantageously allow to predefine the manner in which the end portion of the rivet 5 deforms and thus allow to predefine a retention force to thereby prevent overstressing the connection between the rivet 5 and the PCB 2. While the shown example uses four fins 24, more than four fins may for example be employed e.g. when producing a rivet of larger cross-section and less than four fins may be employed e.g. when producing a rivet of smaller cross-section. Thus, using a deep drawing process for forming rivet 5, it becomes possible that rivet 5 can be formed in a same deep drawing process when forming the heat sink 4 using a same piece of sheet metal which advantageously facilitates the corresponding manufacturing process.

### LIST OF REFERENCE SIGNS:

- 2: Printed circuit board
- 3: Electrical contact
- 4: Heat sink
- 5: Rivet
- 51: Deformed head portion
- 52: Wing portion
- 53: Indentation
- 6: Light emitting diode
- 7: Pin
- 8: Rivet
- 81: End portion
- 83: Mushroom-shaped head portion
- 20: Punch
- 21: Base
- 23: Base portion
- 24: Fin

## Claims

1. An electronic device (10), comprising:
- an electronic component (2);
- at least one heat dissipation structure (4);
- at least one fastening member (5) configured to mechanically fasten the electronic component (2) to the at least one heat dissipation structure (4);
- wherein the at least one fastening member (5) is configured to extend through a corresponding opening formed in the electronic component (2); and
- wherein the at least one fastening member (5) is formed integrally with the at least one heat dissipation structure (4);
**characterized in that,**
- the at least one fastening member (5) comprises a deformed head portion (51) comprising at least two wing portions (52) respectively configured to be pressed against a surface of the electronic component (2) surrounding the opening formed in the electronic component (2); and
- the deformed head portion (51) of the fastening member (5) is formed by deforming an end portion of the fastening member (5) comprising an inner surface with at least one recess formed essentially along a longitudinal axis of the fastening member (5).

2. The electronic device (10) according to claim 1, wherein the at least two wing portions (52) extend in respective directions away from a center of the deformed head portion (51) and are mutually separated by a corresponding indentation (53) oriented towards the center of the deformed head portion (51).

3. The electronic device (10) according to claim 1 or claim 2, wherein at least a portion of the fastening member (5) extending within the opening comprises an inner surface with at least one recess extending essentially along a longitudinal axis of the fastening member (5).

4. The electronic device (10) according to claim 1, wherein the indentation (53) separating the at least two wing portions (52) corresponds at least to a section of the at least one recess before deforming the end portion of the fastening member (5).

5. The electronic device (10) according to claim 1 or claim 2, wherein the electronic component (2) is a printed circuit board and is electrically connected to at least one light emitting element thermally connected with the heat dissipation structure (4).

6. The electronic device (10) according to claim 5, wherein the at least one light emitting element is a light emitting diode, LED.

7. The electronic device (10) according to claim 1 or claim 2, wherein the heat dissipation structure (4) comprises a heat sink or heat spreader.

8. The electronic device (10) according to claim 1 or claim 2, wherein the at least one fastening member (5) is a rivet.

9. Method of manufacturing an electronic device (10) as claimed in any one of claims 1 to 8, the method comprising:
- providing the electronic component (2);
- providing the at least one heat dissipation structure (4);
- providing the at least one fastening member (5) configured to mechanically fasten the electronic component (2) to the at least one heat dissipation structure (4) and configured to extend through the corresponding opening formed in the electronic component;
- deforming an end portion of the fastening member (5) into the deformed head portion (51) comprising the at least two wing portions (52) to be pressed against the surface of the electronic component (2) surrounding the opening formed in the electronic component.

10. The method according to claim 9, further comprising:
- forming the fastening member (5) in a deep drawing process using a punch comprising an essentially cylindrical base portion and at least one fin extending on an outer surface of the base portion along a longitudinal axis of the punch.

11. The method according to claim 10, further comprising:
- carving at least one recess at least into an inner surface of the end portion of the fastening member (5) by means of the at least one fin.

12. The method according to claim 9 or claim 10, further comprising:
- forming the at least one heat dissipation structure (4) and the at least one fastening member (5) in a same deep drawing process.

13. The method according to claim 9 or claim 10, wherein the electronic component (2) is a printed circuit board, the method further comprising:
- providing at least one light emitting element thermally connected with the heat dissipation structure (4); and
- electrically connecting the at least one light emitting element with the printed circuit board.

## Patentansprüche

1. Ein elektronisches Gerät (10), umfassend:
- ein elektronisches Bauteil (2);
- mindestens eine Struktur zur Wärmeabfuhr (4);
- mindestens ein Befestigungselement (5), das so konfiguriert ist, dass es das elektronische Bauteil (2) mechanisch an der mindestens einen Wärmeableitungsstruktur (4) befestigt;
- wobei das mindestens eine Befestigungselement (5) so konfiguriert ist, dass es sich durch eine entsprechende Öffnung erstreckt, die in dem elektronischen Bauteil (2) ausgebildet ist; und
- wobei das mindestens eine Befestigungselement (5) einstückig mit der mindestens einen Wärmeableitungsstruktur (4) ausgebildet ist;
**dadurch gekennzeichnet,**
- **dass** das mindestens eine Befestigungselement (5) ein verformtes Kopfteil (51) umfasst, das mindestens zwei Flügelteile (52) aufweist, die jeweils so konfiguriert sind, dass sie gegen eine Oberfläche des elektronischen Bauteils (2) gedrückt werden, welche die in dem elektronischen Bauteil (2) ausgebildete Öffnung umgibt; und
- **dass** das verformte Kopfteil (51) des Befestigungselements (5) durch Deformieren eines Endstücks des Befestigungselements (5) gebildet wird, das eine Innenfläche mit mindestens einer Aussparung umfasst, die im Wesentlichen entlang einer Längsachse des Befestigungselements (5) ausgebildet ist.

2. Elektronisches Gerät (10) nach Anspruch 1, wobei sich die mindestens zwei Flügelteile (52) in jeweilige Richtungen von einer Mitte des verformten Kopfteils (51) weg erstrecken und durch eine entsprechende Einkerbung (53) getrennt sind, die zur Mitte des verformten Kopfteils (51) hin ausgerichtet ist.

3. Elektronisches Gerät (10) nach Anspruch 1 oder Anspruch 2, wobei mindestens ein Teil des sich in der Öffnung erstreckenden Befestigungselements (5) eine Innenfläche mit mindestens einer sich im Wesentlichen entlang einer Längsachse des Befestigungselements (5) erstreckenden Aussparung aufweist.

4. Elektronisches Gerät (10) nach Anspruch 1, wobei die Einkerbung (53), die die mindestens zwei Flügelteile (52) trennt, mindestens einem Abschnitt der mindestens einen Aussparung vor der Verformung des Endstücks des Befestigungselements (5) entspricht.

5. Elektronisches Gerät (10) nach Anspruch 1 oder Anspruch 2, wobei das elektronische Bauteil (2) eine Leiterplatte ist und elektrisch mit mindestens einem lichtemittierenden Element verbunden ist, das thermisch mit der Wärmeableitungsstruktur (4) verbunden ist.

6. Elektronisches Gerät (10) nach Anspruch 5, wobei das mindestens eine lichtemittierende Element eine Leuchtdiode (LED) ist.

7. Elektronisches Gerät (10) nach Anspruch 1 oder Anspruch 2, wobei die Wärmeableitungsstruktur (4) einen Kühlkörper oder einen Wärmeverteiler umfasst.

8. Elektronisches Gerät (10) nach Anspruch 1 oder Anspruch 2, wobei das mindestens eine Befestigungselement (5) eine Niete ist.

9. Verfahren zur Herstellung eines elektronischen Geräts (10) nach einem der Ansprüche 1 bis 8, wobei das Verfahren umfasst:
- Bereitstellen des elektronischen Bauteils (2);
- Bereitstellen der mindestens einen Wärmeableitungsstruktur (4);
- Bereitstellen des mindestens einen Befestigungselements (5), das so konfiguriert ist, dass es das elektronische Bauteil (2) mechanisch an der mindestens einen Wärmeableitungsstruktur (4) befestigt, und so konfiguriert ist, dass es sich durch die entsprechende in dem elektronischen Bauteil ausgebildete Öffnung erstreckt;
- Verformen eines Endstücks des Befestigungselements (5) in das verformte Kopfteil (51), das die mindestens zwei Flügelteile (52) umfasst, was gegen die Oberfläche des elektronischen Bauteils (2) gedrückt werden soll und die ausgebildete Öffnung des elektronischen Bauteils umgibt.

10. Verfahren nach Anspruch 9, das ferner umfasst:
- Formung des Befestigungselements (5) in einem Tiefziehverfahren unter Verwendung eines Stempels, der ein im Wesentlichen zylindrisches Basisteil und mindestens eine Rippe umfasst, die sich auf einer Außenfläche des Basisteils entlang einer Längsachse des Stempels erstreckt.

11. Verfahren nach Anspruch 10, das ferner umfasst:
- Einschnitzen mindestens einer Aussparung in eine Innenfläche des Endstücks des Befestigungselements (5) mit Hilfe der mindestens einen Rippe.

12. Verfahren nach Anspruch 9 oder Anspruch 10, das ferner umfasst:
- Formung der mindestens einen Wärmeableitungsstruktur (4) und des mindestens einen Befestigungselements (5) in einem einzigen Tiefziehverfahren.

13. Verfahren nach Anspruch 9 oder Anspruch 10, wobei das elektronische Bauteil (2) eine Leiterplatte ist, umfasst das Verfahren ferner:
- mindestens ein lichtemittierendes Element, das thermisch mit der Wärmeableitungsstruktur (4) verbunden ist; und
- elektrische Verbindung des mindestens einen lichtemittierenden Elements mit der Leiterplatte.

## Revendications

1. Appareil électronique (10) comprenant :
- un composant électronique (2) ;
- au moins une structure de dissipation de la chaleur (4) ;
- au moins un élément de fixation (5) configuré pour fixer mécaniquement le composant électronique (2) à au moins une structure de dissipation de la chaleur (4) ;
- dans lequel ledit au moins un élément de fixation (5) est configuré pour s'étendre à travers une ouverture correspondante formée dans le composant électronique (2) ; et
- dans lequel ledit au moins un élément de fixation (5) est formé intégralement avec ledit au moins une structure de dissipation de la chaleur (4) ;
**caractérisé par,**
- ledit au moins un élément de fixation (5) comprend une partie de tête déformée (51) comprenant au moins deux parties d'aile (52) respectivement configurées pour être pressées contre une surface du composant électronique (2) entourant l'ouverture formée dans le composant électronique (2) ; et
- la partie de tête déformée (51) de l'élément de fixation (5) est formée par déformation d'une partie d'extrémité de l'élément de fixation (5) comprenant une surface intérieure avec au moins une entaille formée essentiellement le long d'un axe longitudinal de l'élément de fixation (5).

2. Appareil électronique (10) selon la revendication 1, dans lequel les au moins deux parties d'aile (52) s'étendent dans des directions respectives loin d'un centre de la partie de tête déformée (51) et sont mutuellement séparées par une encoche correspondante (53) orientée vers le centre de la partie de tête déformée (51).

3. Appareil électronique (10) selon la revendication 1 ou la revendication 2, dans lequel au moins une partie de l'élément de fixation (5) s'étendant à l'intérieur de l'ouverture comprend une surface intérieure avec au moins une entaille s'étendant essentiellement le long d'un axe longitudinal de l'élément de fixation (5).

4. Appareil électronique (10) selon la revendication 1, dans lequel l'encoche (53) séparant les au moins deux parties d'aile (52) correspond au moins à une section de ledit au moins une entaille avant la déformation de la partie d'extrémité de l'élément de fixation (5).

5. Appareil électronique (10) selon la revendication 1 ou la revendication 2, dans lequel le composant électronique (2) est une carte de circuit et est connecté électriquement à au moins un élément émetteur de lumière connecté thermiquement à la structure de dissipation de chaleur (4).

6. Appareil électronique (10) selon la revendication 5, dans lequel ledit au moins un élément émetteur de lumière est une diode électroluminescente (DEL).

7. Appareil électronique (10) selon la revendication 1 ou la revendication 2, dans lequel la structure de dissipation de la chaleur (4) comprend un dissipateur thermique ou un répartiteur de chaleur.

8. Appareil électronique (10) selon la revendication 1 ou la revendication 2, dans lequel ledit au moins un élément de fixation (5) est un rivet.

9. Procédé de fabrication d'un appareil électronique (10) selon l'une des revendications 1 à 8, le procédé comprenant :
- mise à disposition du composant électronique (2) ;
- mise à disposition de ledit au moins une structure de dissipation de la chaleur (4) ;
- mise à disposition de ledit au moins un élément de fixation (5) configuré pour fixer mécaniquement le composant électronique (2) à au moins une structure de dissipation de la chaleur (4) et configuré pour s'étendre à travers l'ouverture correspondante formée dans le composant électronique ;
- déformer une partie d'extrémité de l'élément de fixation (5) en une partie de tête déformée (51) comprenant au moins deux parties d'aile (52) à presser contre la surface du composant électronique (2) entourant l'ouverture formée dans le composant électronique.

10. Procédé selon la revendication 9, comprenant en outre :
- former l'élément de fixation (5) par emboutissage à l'aide d'un poinçon comprenant une partie de base essentiellement cylindrique et au moins une ailette s'étendant sur une surface extérieure de la partie de base le long d'un axe longitudinal du poinçon.

11. Procédé selon la revendication 10, comprenant en outre :
- creuser au moins une entaille dans une surface intérieure de la partie d'extrémité de l'élément de fixation (5) au moyen d'au moins une ailette.

12. Procédé selon la revendication 9 ou la revendication 10, comprenant en outre:
- former ledit au moins une structure de dissipation de la chaleur (4) et ledit au moins un élément de fixation (5) au cours d'un même processus d'emboutissage.

13. Procédé selon la revendication 9 ou la revendication 10, dans laquelle le composant électronique (2) est une carte de circuit, le procédé comprenant en outre :
- mise à disposition d'au moins un élément émetteur de lumière relié thermiquement à la structure de dissipation de la chaleur (4) ; et
- connecter électriquement ledit au moins un élément émetteur de lumière à la carte de circuit.
